# EUROPEAN PATENT APPLICATION

(11) **EP 1 715 157 A1**
(43) Date of publication of application: **25.10.2006**
(21) Application number: 06252158.8
(22) Date of filing: 21.04.2006
(51) Int. Cl.: F01P 11/10, F01P 5/06

(54) **Cooling apparatus and method for a vehicle**

(30) Priority: 21.04.2005 JP 2005123146
(71) Applicant: NISSAN MOTOR CO., LTD., Yokohama-shi, Kanagawa 221-0023 (JP)
(72) Inventor: Ino, Ryunosuke, Yokohama-shi Kanagawa 221-0023 (JP); Shimonosono, Hitoshi, Yokohama-shi Kanagawa 221-0023 (JP); Ishikawa, Shunichi, Yokohama-shi Kanagawa 221-0023 (JP)
(74) Representative: Holmes, Matthew William

(57) **Abstract**

A cooling device for a vehicle has a heat exchanger, a duct that forms a passage for air that has passed through the heat exchanger, and a cross-flow fan provided within the duct. The fan draws in the air that has passed through the heat exchanger and blows it out from the duct. The fan is placed outside of a horizontal projection area from the vehicle front to the vehicle rear of the heat exchanger. The duct has an opening portion that opens when the vehicle is at a predetermined speed or more so that the air that has passed through the heat exchanger when the vehicle is at the predetermined speed or more passes through the opening portion without passing through the fan.

## Description

The present invention relates to a cooling apparatus and method for a vehicle and particularly, but not exclusively, to a cooling apparatus for use on a vehicle for cooling a heat exchanger, such as a radiator on a water-cooled engine or a condenser of a refrigeration cycle, using a fan. The invention also relates to a device.

A cooling device for use on a vehicle using a fan, such as a cross-flow fan, is conventionally known (see, for example, Japanese Laid-Open Patent Publication H11-321346). The conventional cooling device used on a vehicle using a fan is typically constructed by placing the fan at about the same height as a heat exchanger, such as a radiator of a water-cooled engine or a condenser of a refrigeration cycle. As such, the fan becomes a resistance to airflow through the heat exchanger, for example when the fan is not operating and a forward motion of the vehicle produces the airflow. This resistance acts to reduce the velocity of the air through the heat exchanger, thereby causing a reduction in performance of the heat exchanger.

It is an aim of the invention to address this problem.

Aspects of the invention therefore provide an apparatus and a method as set out in the appended claims.

According to another aspect of the invention, there is provided a cooling apparatus for a vehicle comprising heat exchanger means having a cross sectional area; duct means for channelling air that has passed through the heat exchanger means and fan means for drawing in the air that has passed through the heat exchanger means and blowing it from an exit of the duct means, the fan means being disposed outside of a volume projected behind the heat exchanger means and corresponding to the cross sectional area thereof.

According to a further aspect of the invention there is provided a cooling apparatus for a vehicle comprising heat exchanger means, duct means for channelling air that has passed through the heat exchanger means and fan means for drawing in the air that has passed through the heat exchanger means and blowing it from an exit of the duct means, the fan means being disposed outside of an area immediately behind the heat exchanger means.

According to a still further aspect of the invention there is provided a cooling apparatus for a vehicle comprising heat exchanger means, duct means for channelling air that has passed through the heat exchanger means and fan means for drawing in the air that has passed through the heat exchanger means and blowing it from an exit of the duct means, the fan means being disposed outside of a flow path of air flowing through the heat exchanger means.

In an embodiment, the duct means includes valve means arranged to open when the vehicle is travelling at or above a predetermined speed such that air that has passed through the heat exchanger means passes through the opening portion.

In an embodiment, the fan means comprises a cross-flow fan or flow-through impeller.

According to another aspect of the invention there is provided a cooling device for a refrigeration cycle or an internal combustion engine or both of a vehicle, comprising a heat exchanger connected to the internal combustion engine or the refrigeration cycle, a duct that forms a passage for air that has passed through the heat exchanger and a cross-flow fan provided within the duct, wherein the fan draws in the air that has passed through the heat exchanger and blows it out from the duct, wherein the fan is placed outside of a horizontal projection area from the vehicle front to the vehicle rear of the heat exchanger and wherein the duct has an opening portion that opens when the vehicle is at a predetermined speed or more, wherein the air that has passed through the heat exchanger when the vehicle is at the predetermined speed or more passes through the opening portion.

In an embodiment the fan is placed above or below the horizontal projection area of the heat exchanger.

In an embodiment the fan is a first fan, and the device further comprises a second fan, wherein one of the first or second fans is placed above the horizontal projection area of the heat exchanger and the other of the first or second fans is placed below the horizontal projection area of the heat exchanger.

In an embodiment bearings on both sides, in the vehicle width direction, of the fan are provided at closed cross-section portions of a member that constitutes a side unit of the vehicle.

The device may further comprise a motor for driving the fan provided within a closed cross-section portion of a member that constitutes a side unit of the vehicle. In an embodiment a member that constitutes a vehicle body is used as a part of the duct.

In an embodiment the member that constitutes the vehicle body is a cross member that is a skeletal member of the vehicle body extending in a vehicle width direction, and an upper surface or a lower surface of the cross member is used as a part of the duct.

In an embodiment the cross member is a cross member provided at a bottom of the vehicle body, and the lower surface of the cross member is formed to a contiguous shape with an under cover that forms the bottom surface of the vehicle body.

In an embodiment the fan is placed to the rear of the vehicle of the cross member, and a rear end portion of the cross member is formed to a shape that conforms to a shape of the fan.

In an embodiment the opening portion opens when a pressure in the duct reach a predetermined pressure that corresponds to the pressure when the vehicle is running at the predetermined speed or more.

In an embodiment the opening portion that opens when at a predetermined vehicle speed comprises flaps that open and close based on a speed of the vehicle.

In an embodiment the fan is provided on a portion in which air pressure becomes lower than the atmospheric pressure when the vehicle is running.

The device or apparatus may further comprise an actuator that is mechanically and/or electrically coupled to the opening portion.

The device or apparatus may further comprise a controller electrically coupled to the actuator.

According to yet another aspect of the invention there is provided a cooling device for a vehicle, comprising a heat exchanger, a duct that forms a passage for air that has passed through the heat exchanger, the duct comprising one or more flaps located within a horizontal projection area from the vehicle front to the vehicle rear of the heat exchanger, a cross-flow fan provided within the duct and placed outside of the horizontal projection area from the vehicle front to the vehicle rear of the heat exchanger, an actuator coupled to the one or more flaps and a controller electrically coupled to the actuator, wherein the controller is configured to instruct the actuator to open the flaps when the vehicle is at a predetermined speed or more so that air that has passed through the heat exchanger when the vehicle is at a predetermined speed or more passes through the flaps without passing through the fan.

According to a further aspect of the invention there is provided a method of cooling a vehicle, the method comprising when a speed of the vehicle is less than a predetermined speed, drawing an airflow through a heat exchanger using a cross-flow fan located outside of a horizontal projection area from the vehicle front to the vehicle rear of the heat exchanger and when the vehicle speed is greater than or equal to the predetermined speed turning the fan off and using a motion of the vehicle to push the airflow through the heat exchanger.

In an embodiment the method comprises, when the vehicle speed is greater than or equal to the predetermined speed, directing the airflow through one or more flaps after pushing the airflow through the heat exchanger.

In an embodiment when the vehicle speed is less than the predetermined speed the one or more flaps are closed. The method may comprise opening the one or more flaps when the vehicle speed becomes greater than or equal to the predetermined speed. In an embodiment the one or more flaps open in response to a force exerted thereon by the airflow. In an embodiment the one or more flaps are electrically opened.

Embodiments of the invention may be arranged to increase a pass-through rate of a fluid flow, through a heat exchanger, such as a radiator of a water-cooled engine and a condenser of a refrigeration cycle, by reducing a resistance to fluid flow that has passed through the heat exchanger, thereby improving the heat exchanger performance.

For example, an embodiment of the invention provides a cooling device for use on a vehicle. The cooling device has a heat exchanger, such as a radiator on a water-cooled engine or a condenser of a refrigeration cycle, and a fan, such as a cross-flow fan, is placed outside a horizontal projection area from the vehicle front to the vehicle rear of the heat exchanger and not immediately behind the heat exchanger. This acts to reduce the resistance of the fan on a fluid flow, such as the wind, through the heat exchanger compared to when the fan is placed within the horizontal projection area to the vehicle rear of the heat exchanger and immediately behind the heat exchanger and thus acts to increase the rate of fluid flow through the heat exchanger. In one embodiment, air that has passed through the heat exchanger when at a predetermined vehicle speed or higher bypasses the fan. This may resuly in an improvement in the performance of the heat exchanger.

Furthermore, by not placing the fan immediately behind the heat exchanger, it may be possible to suppress the change in the passage cross-section area of the duct within a limited vehicle lengthwise direction measurement, resulting in the ability to reduce the fluid-flow resistance. Therefore, in this manner, the rate of fluid flow through the heat exchanger can be increased and thus improvement of the radiating performance can be anticipated, and the vehicle rearward space of the heat exchanger can be kept to a minimum, allowing for an improvement in space efficiency.

The various aspects, embodiments and alternatives set out in the preceding paragraphs, in the claims and in the following description, may be implemented in individually or in combination.

The present invention will now be described, by way of example only, with reference to the accompanying drawings in which:
Figure 1 is a schematic drawing of the vehicle front as viewed from the vehicle side showing a cooling apparatus embodying the invention;
Figure 2 is a schematic drawing of the vehicle front omitting the duct 12 as viewed from the vehicle front showing a cooling apparatus embodying the invention;
Figure 3 is a schematic drawing of the vehicle front omitting the duct 12 as viewed from the vehicle top showing a cooling apparatus embodying the invention;
Figure 4 is a perspective view as viewed from the vehicle rear diagonal direction showing the duct 12 of a cooling apparatus embodying the invention;
Figure 5 is a schematic drawing as viewed from a rear diagonal direction showing the state in which the side plate 122 of the duct 12 is removed for a cooling apparatus embodying the invention;
Figure 6 is a schematic drawing of the vehicle front as viewed from the vehicle side showing a cooling apparatus embodying the invention;
Figure 7 is a schematic drawing as viewed from the rear diagonal direction showing a state in which the side plate 122 of the duct 12 is removed for a cooling apparatus embodying the invention;
Figure 8 is a schematic drawing of the vehicle front as viewed from the vehicle side showing a cooling apparatus embodying the invention;
Figure 9 is a schematic drawing as viewed from the rear diagonal direction showing a state in which the side plate of the duct 312 is removed for a cooling apparatus embodying the invention;
Figure 10 is a perspective view as viewed from the rear diagonal direction of the vehicle showing the duct 312 of a cooling apparatus embodying the invention;
Figure 11 is a schematic drawing of the vehicle front omitting the duct 312 as viewed from the vehicle front showing a cooling apparatus embodying the invention;
Figure 12 is a schematic drawing of the vehicle front omitting the duct 312 as viewed from the vehicle top showing a cooling apparatus embodying the invention;
Figure 13 is a schematic drawing of the vehicle front as viewed from the vehicle side showing a cooling apparatus embodying the invention;
Figure 14 is a perspective view as viewed from the rear diagonal direction showing the closed flapper for a cooling apparatus embodying the invention;
Figure 15 is a perspective view as viewed from the vehicle rear diagonal direction showing the open flapper for a cooling apparatus embodying the invention;
Figure 16 is a schematic drawing of the vehicle front as viewed from the vehicle side showing a cooling apparatus embodying the invention;
Figure 17 is a schematic drawing of the vehicle front as viewed from the vehicle side showing a cooling apparatus embodying the invention;
Figure 18 is a perspective view as viewed from the vehicle rear diagonal direction showing a control system for opening and closing flappers for a cooling apparatus embodying the invention;

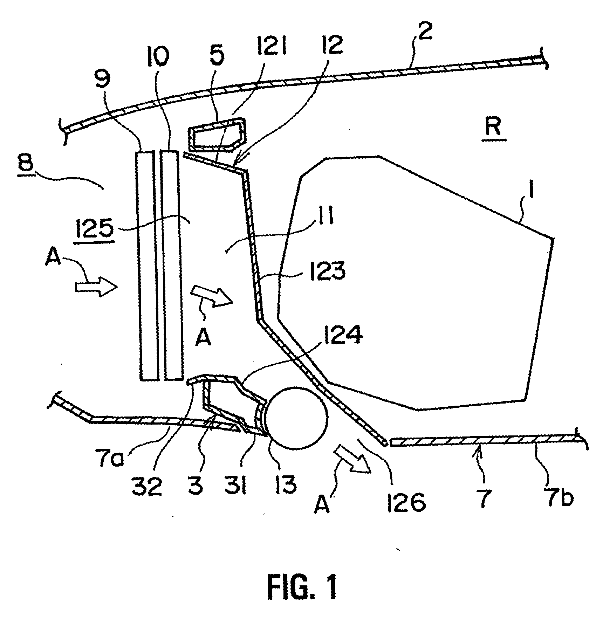

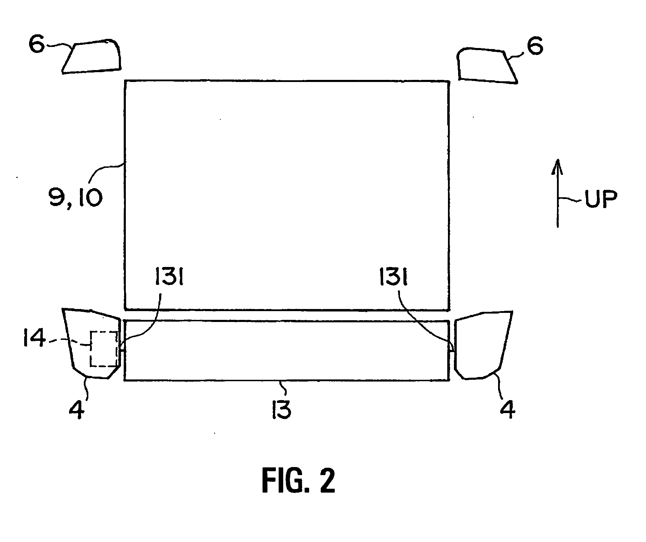

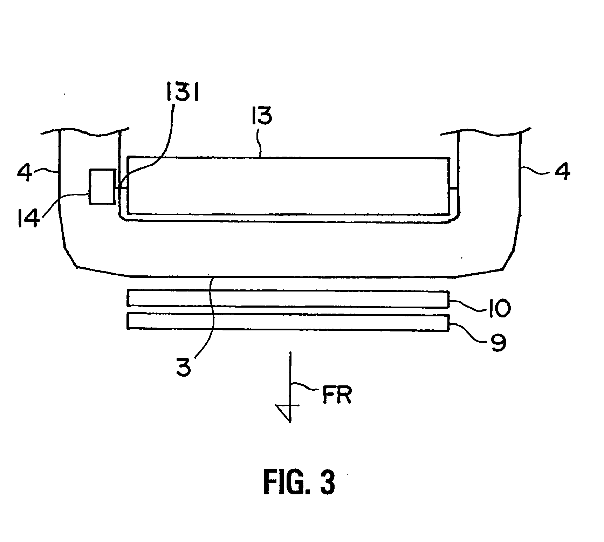

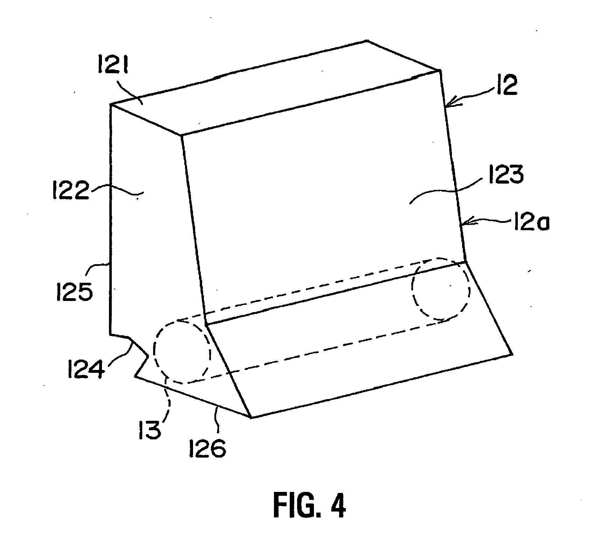

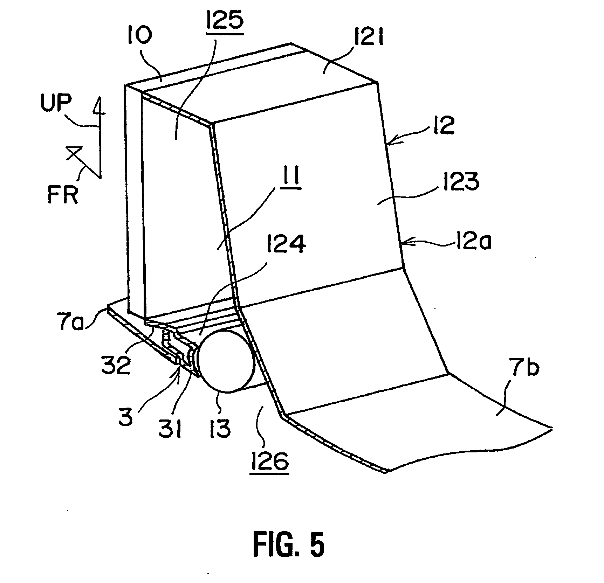

Reference is firstly made to Figures 1 to 5 in which Figure 1 is a schematic drawing of the vehicle front as viewed from the vehicle side showing the cooling device for use on a vehicle of the first embodiment; Figure 2 is a schematic drawing of the vehicle front omitting the duct 12 as viewed from the vehicle front showing the cooling device for use on a vehicle of the first embodiment; Figure 3 is a schematic drawing of the vehicle front omitting the duct 12 as viewed from the vehicle top showing the cooling device for use on a vehicle of the first embodiment; Figure 4 is a perspective view as viewed from the vehicle rear diagonal direction showing the duct 12 of the cooling device for use on a vehicle of the first embodiment; Figure 5 is a schematic drawing as viewed from a rear diagonal direction showing the state in which the side plate 122 of the duct 12 is removed for a cooling device for use on a vehicle of the first embodiment.

Beginning first with a description of the construction, an engine compartment R for housing a water-cooled engine 1 for use in running a vehicle is provided in the vehicle front of the dash panel outside of the drawing.

The engine compartment R is covered by the hood 2 from the vehicle top, and a first cross member 3, which constitutes a closed cross section, extends in the vehicle lateral direction as a skeletal member of the vehicle body at the front end of the vehicle. Both ends of the vehicle lateral direction of the first cross member 3, shown in Figure 2 and Figure 3, are coupled to the front side members 4, 4, which constitute a closed cross section, as a skeletal member of the vehicle body. Moreover, FR indicated by the arrow in each of the drawings indicates the vehicle front and the UP arrow indicates the vehicle top.

Further, the radial core upper support member 5 that constitutes the closed cross section extends in the vehicle lateral direction as a skeletal member of the vehicle body to the vehicle top position of the first cross member 3 as shown in Figure 1; and both ends of the vehicle lateral direction are coupled to the front side upper member 6 as a vehicle skeletal member extending in the vehicle lengthwise direction along the top of the fender panel outside of the drawing.

Moreover, the bottom of the engine compartment R is covered by the front under cover 7. The front under cover 7 regulates the flow of air of the vehicle bottom surface, and prevents the oil pan of the engine 1 from directly colliding with a projection in the path, and reduces noise projected outside of the vehicle. Moreover, the front under cover 7 is divided into a front unit 7a placed more to the vehicle front than the first cross member 3, and a rear unit 7b positioned to the vehicle rear of the blow opening 126 of the duct 12, to be described hereafter.

The intake 8 for taking in air is opened at the front end of the engine compartment R facing the vehicle front. The condenser 9 and radiator 10, which are the heat exchanger, are placed to the front and rear of the vehicle supported by the first cross member 3 and the radial core upper support member 5 directly after the vehicle rear of the intake 8. The condenser 9 condenses by cooling the refrigerant circulating within the refrigeration cycle (not shown in drawing) for the vehicle. The radiator 10 is a so-called common cooling device component in which cooling water flows circulating within the engine 1 itself and cools by the wind entering from the intake 8.

The cooling device for use on a vehicle of the first embodiment cools condenser 9 and radiator 10, which are the heat exchanger, and comprises a duct 12 for forming an air passage 11 for air that has passed through the radiator 10 to flow down a vehicle, and a cross-flow fan 13 housed in the duct 12.

The duct 12, as shown in Figure 4, is formed in a box shape encompassed by a top plate 121, side plates 122, 122, rear plate 123, and bottom plate 124, and has an inlet opening 125 that covers the entire surface of the vehicle rear surface of the radiator 10, and an outlet opening 126 that is opened to the vehicle bottom (see Figure 1).

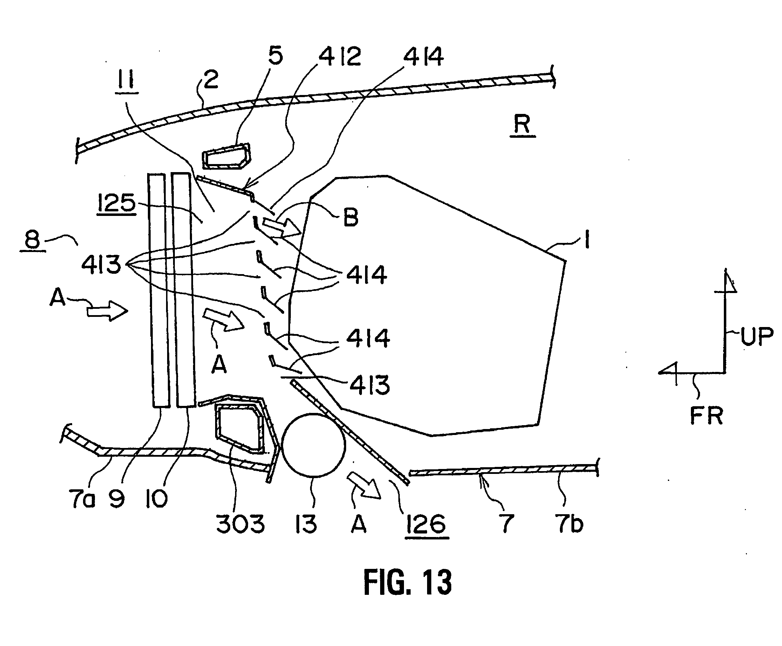

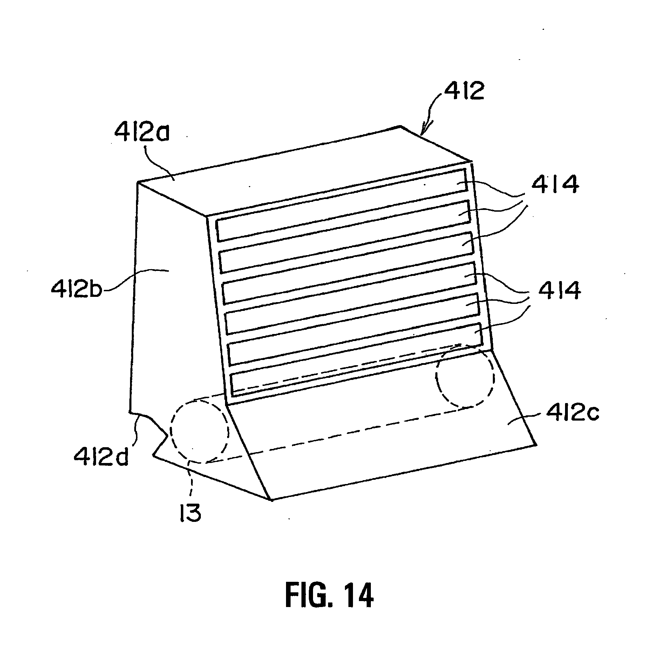

The duct 12 is further formed by the duct main body 12a formed by a plate member such as resin or the like, and the upper surface of the first cross member 3. In other words, the upper plate 121, side plates 122, 122 and rear plate 123 form the duct main body 12a, and as shown in Figure 1 and Figure 5, the bottom plate 124 is formed on the top surface of the first cross member 3. Further, since the bottom plate 124 is formed by the top surface of the first cross member 3, the flange 32 that touches the bottom end of the radiator 10 is provided to the top of the first cross member 3. In addition, flappers 414 for opening and closing each rear opening 413 are provided as shown in Figure 13 and 14 although those are not described in Figure 1,4, and 5. Those structures are explained in detail after.

The cross-flow fan 13, also called a flow-through impeller, is constructed so that air passes through a cross section perpendicular to the axis of a multi-blade impeller to create by its rotation an air flow due to the restricting action of the duct 12, thereby blowing the air that passed through the radiator 10 forcefully from the outlet 126 outside of the engine compartment R.

In addition, as shown in Figure 1, cross flow fan 13 is placed lower than the horizontal projection area from the front of the vehicle toward the rear of the vehicle of condenser 9 and radiator 10, which are the radiation means, on the bottom surface of the vehicle where minus pressure, which means a lower pressure than the atmospheric pressure, is generated when the vehicle is running and placed on outlet 126.

In addition, the rear unit of the first cross member 3 is formed in a curved shape that conforms to the shape of the cross-flow fan circumference of the cross-flow fan 13. Further, bottom surface rear unit 31 of the first cross member 3 forms a shape that connects to the front unit 7a of the front under cover 7 that forms the vehicle bottom surface.

The cross-flow fan 13 supports bearings 131, 131 that are supported to freely rotate at both ends in the vehicle lateral direction by the metal plate portions of the front side members 4, 4 as the closed cross section member comprising the vehicle side, as shown in Figure 2 and Figure 3. A motor 14 is further housed within the closed cross section of the front side member 4 for rotating the cross-flow fan 13.

A description of the operation of the first embodiment is given hereinafter.

When the operating wind pressure is low, such as when running at a low speed, cross flow fan 13 is rotated, a flow of wind is created in air passage 11 of duct 412 that flows from inlet 125 toward outlet 126, as indicated by Arrow A in the drawing, to cool condenser 9 and radiator 10. When this takes place, air flows efficiently due to the fact that cross flow fans 413 are placed on the bottom surface of the vehicle where minus pressure is generated.

At this time, because the cross-flow fan 13 is placed at a lower position than the condenser 9 and the radiator 10, the wind meets a lower resistance after it immediately passes through the radiator 10 to the vehicle rear, compared to when it directly strikes the cross-flow fan 13, thereby improving the pass-through wind speed. Therefore, an improvement in the radiating performance of the heat exchanger can be anticipated.

Further, since the cross-flow fan 13 is not placed within the horizontal projection area towards the vehicle rear of the radiator 10, this allows for reduced air resistance by suppressing change to the cross section area of the duct 12 within a limited vehicle lengthwise direction measurement between the radiator 10 and the engine 1. In other words, when comparing within the same vehicle lengthwise measurement, the shape of the duct 12 can be formed to a shape that does not significantly constrict immediately after the inlet 125, compared to when the cross-flow fan 13 is placed immediately after the radiator 10, making it possible to reduce the air resistance.

Therefore, the pass-through wind speed can be improved compared to when the cross-flow fan 13 is placed immediately after the radiator 10, and further improvement to the radiating performance can be anticipated while suppressing the vehicle rearward space of the heat exchanger to a minimum, allowing for an improvement in space efficiency.

Furthermore, with the first embodiment, the bearings 131, 131 of both sides of the cross-flow fan 13 are provided on the front side member 4, and the motor 14 is housed within the front side member 4, and these bearings 131 and motor 14 are placed outside the engine compartment R. This allows for an increased vehicle lateral direction measurement of the cross-flow fan 13, as compared to a construction in which the bearings 131 and motor 14 are placed within the engine compartment R, resulting in an expansion of the lateral measurement of the duct 12 and the air passage 11 and in this manner, an increase in the amount of air can also be devised. Therefore, in addition to the anticipation for an improvement in the cooling effectiveness, an improvement in space efficiency can also be devised.

Furthermore, because the duct 12 is box-shaped, thereby utilizing the upper surface of the first cross member 3, which is the member that constitutes the vehicle body, as the bottom plate 124, material for the duct main body 12a can be reduced, and the volume of the air passage 11 can be increased up to the position of the first cross member 3, allowing for an increase in the wind volume. Therefore, a reduction in cost and an improvement in the cooling effectiveness can be anticipated.

On the other hand, because the rear unit of the first cross member 3 is formed in a curved shape along the circumference of the cross-flow fan 13, gaps and unevenness in the air passage 11 can be prevented, which suppresses the air resistance, thereby allowing for an improvement in the cooling efficiency to be anticipated.

Further, because the bottom surface rear unit 31 of the first cross member 3 is shaped to be contiguous to the front unit 7a of the front under cover 7 placed at the vehicle front, the bottom surface shape of the vehicle body becomes smooth, which is advantageous in that it raises the clearance of the vehicle, compared to when front under cover 7 is provided to the vehicle bottom of the first cross member 3.

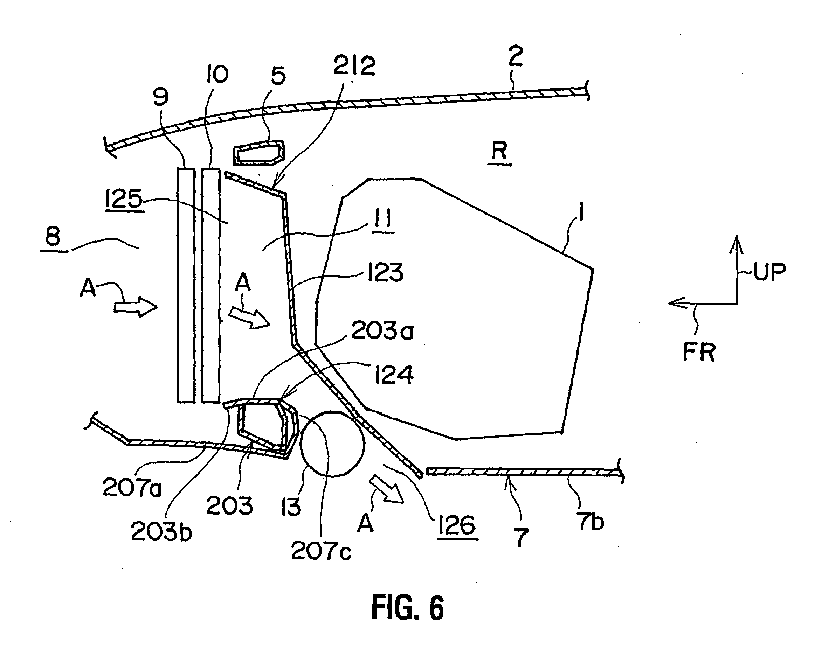

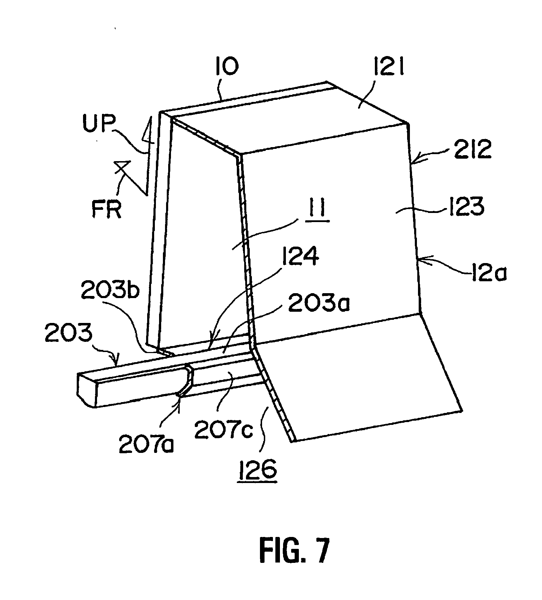

Figure 6 and Figure 7 are drawings for explaining the cooling device for use on a vehicle of the second embodiment of the present invention. Figure 6 is a schematic drawing of the vehicle front as viewed from the vehicle side showing the cooling device for use on a vehicle of the second embodiment; Figure 7 is a schematic drawing as viewed from the rear diagonal direction showing a state in which the side plate 122 of the duct 12 is removed for the cooling device for use on a vehicle of the second embodiment.

The same reference symbols will be used in the description of the cooling device for use on a vehicle for the second embodiment for those portions where they are the same or similar to the first embodiment, and an explanation will be provided concentrating on those points that are different.

The cooling device for use on a vehicle of the second embodiment is an example in which the shape of the front unit 7a of the front under cover 7 and the duct 12 of the first embodiment is changed.

The duct 212 of the cooling device for use on a vehicle for the second embodiment forms the bottom plate 124 from the first cross member 203 and the rear end part 207c of the front unit 207a of the front under cover 7. In other words, the first cross member 203 and cross-flow fan 13 are placed apart in the vehicle lengthwise direction. The rear end part 207c of the front unit 207a extends to the vehicle rear until connecting near cross-flow fan 13, without limit, to form the air passage 11 of the duct 212 while starting at the vehicle top so as to abut or nearly abut to the rear end unit of the upper surface 203a of the first cross member 203 and bend back again to the vehicle front to form the rear half of the bottom plate 124.

The first cross member 203 has a flange 203b whose top end extends near to the bottom end portion of the radiator 10, and which forms the front of the bottom plate 124 that covers the vehicle bottom side of the air passage 11 by the flange 203b and the top surface 203a.

Also in this second embodiment, because one part of the duct 212 is formed from the front unit 207a of the front under cover 7 and the first cross member 203, which is the member that comprises the vehicle body, the material of the duct main body 12a can be reduced, and the volume of the air passage 11 can be enlarged to the position of the first cross member 203, allowing for an increased wind volume. Therefore, a reduction in cost and an improvement in cooling effectiveness can be anticipated.

Moreover, because both aspects with respect to the ability to devise an improvement in the cooling efficiency by reducing the air resistance and the ability to devise an improvement in the space efficiency are the same, as was the case with the first embodiment, a detailed explanation has been omitted.

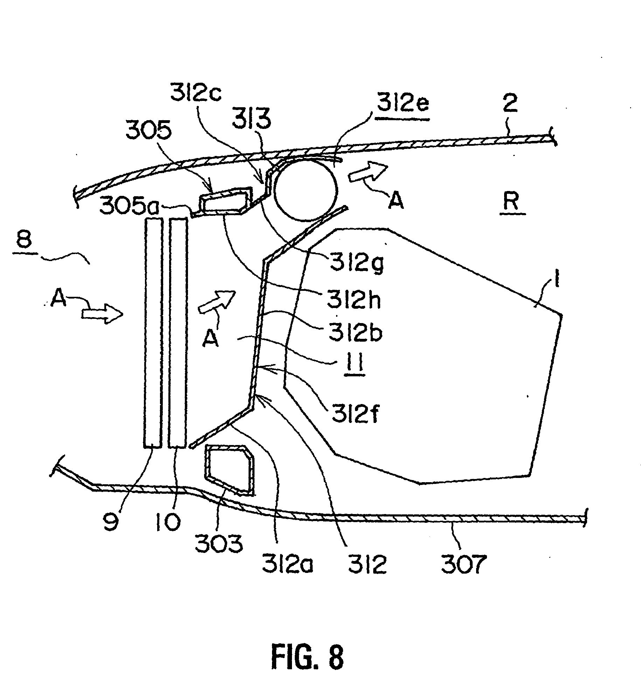

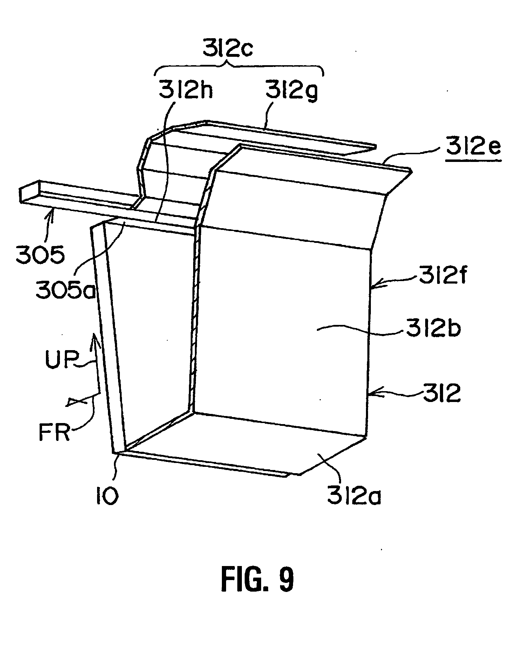

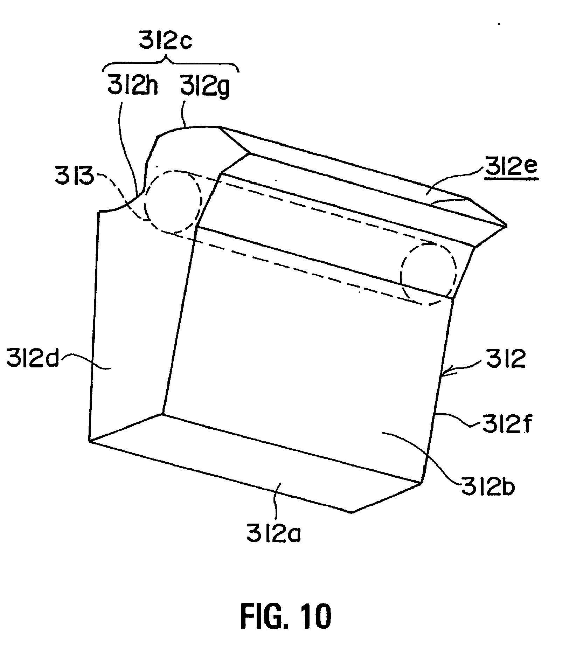

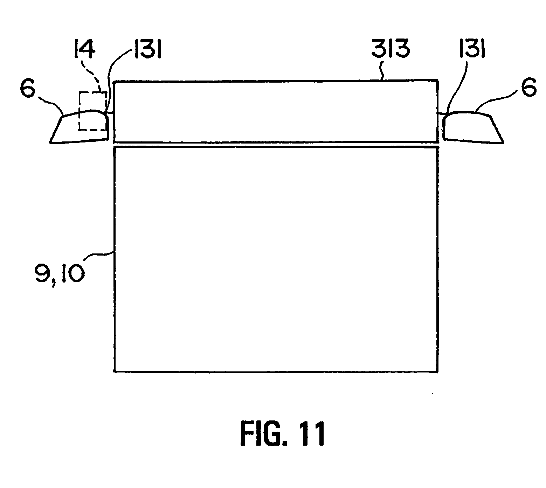

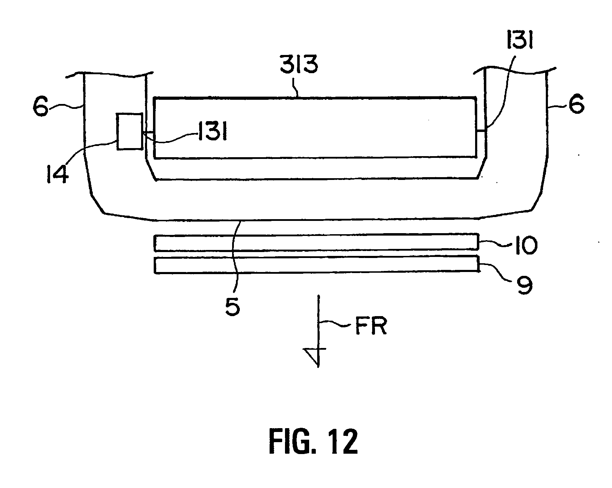

Figure 8 through Figure 12 are descriptions of the cooling device for use on a vehicle for the third embodiment of the present invention. Figure 8 is a schematic drawing of the vehicle front as viewed from the vehicle side showing the cooling device for use on a vehicle of the third embodiment; and Figure 9 is a schematic drawing as viewed from the rear diagonal direction showing a state in which the side plate of the duct 312 is removed for the cooling device for use on a vehicle of the third embodiment; and Figure 10 is a perspective view of the rear diagonal direction of the vehicle showing the duct 312 of the cooling device for use on a vehicle of the third embodiment; and Figure 11 is a schematic drawing of the vehicle front omitting the duct 312 as viewed from the vehicle front showing the cooling device for use on a vehicle of the third embodiment; and Figure 12 is a schematic drawing of the vehicle front omitting the duct 312 as viewed from the vehicle top showing the cooling device for use on a vehicle of the third embodiment.

Moreover, the same reference symbols will be used in the description of the cooling device for use on a vehicle for the third embodiment for those portions where they are the same or similar to the first embodiment and the second embodiment, and an explanation will be provided concentrating on those points that are different.

The cooling device for use on a vehicle for the third embodiment is an example wherein the cross-flow fan 313 is provided in a position higher than the horizontal projection area range to the vehicle rear of the condenser 9 and the radiator 10.

In other words, the duct 312 forms a box shape encompassing a bottom plate 312a, rear plate 312b, top plate 312c, and side plate 312d, and an outlet 312e is provided in the vicinity of hood 2, and the cross-flow fan 313 is attached to this outlet 312e.

In addition, the duct 312 is formed by the duct main body 312f and radial core support member 305. In other words, the duct main body 312f forms the bottom plate 312a, rear plate 312b, and side plate 312d, and the rear half portion 312g of the top plate 312c is further formed.

On the other hand, the front half portion 312h of the top plate 312c is formed by utilizing the radial core support member 305 as the member that constitutes the vehicle body. In other words, the flange 305a that extends to the radiator 10 is formed at the vehicle bottom end of the radial core support member 305, and the front half portion 312h of the top plate 312c is formed by the flange 305a and the bottom surface of the radial core support member 305.

Moreover, the bottom surface of the engine compartment R, is covered by a single plate of a front under cover 307. Further, the first cross member 303 is formed in a shape where the flange 203b is removed from the first cross member 203 shown in the second embodiment and is placed at the vehicle bottom of the bottom plate 312a of the duct 312.

In addition, the cross-flow fan 313 supports the bearings 131, 131 that are supported to freely rotate at both ends in the vehicle lateral direction by the metal plate portions of the front side upper members 6, 6 as the closed cross section member comprising the vehicle side, as shown in Figure 11 and Figure 12. A motor 14 is further housed within the closed cross section of the front side upper member 6 for rotating the cross-flow fan 313.

A description of the operation of the third embodiment is given hereinafter.

Also in the case of the cooling device for use on a vehicle for the third embodiment, the cross-flow fan 313 is placed in a position that is higher than the horizontal projection area that is outside the range of the horizontal projection area toward the vehicle rear of the condenser 9 and radiator 10. Therefore, the cross-flow fan 313 does not become a resistance to the air, but suppresses the air resistance, resulting in an increase in the volume of wind, allowing for an improvement in cooling performance.

Furthermore, by suppressing change to the cross section area of the duct 312 within a limited vehicle length-wise direction measurement between the radiator 10 and the engine 1 the air resistance can be reduced by that amount. Therefore, the pass-through wind speed can be improved, compared to when the cross-flow fan 313 is placed directly behind the radiator 10, and further improvement of the radiating performance can be anticipated and the vehicle rearward space of the heat exchanger can be kept to a minimum, allowing for an improvement in space efficiency.

Also for the third embodiment, because the front half portion 312h of the top plate 312c of the duct 312 is formed from the radial core support member 305, which is the member that constitutes the vehicle body, the material of the duct main body 312f can be reduced, and the volume of the air passage 11 can be enlarged to the position of the radial core support member 305, allowing for an increased wind volume. Therefore, a reduction in cost and an improvement in cooling effectiveness can be anticipated.

Further, because the motor 14 and the bearing 131 of the cross-flow fan 313 are attached to the front side upper member 6, as was the case in the first embodiment, the width measurement of the air passage 11 and the duct 12 can be enlarged in an attempt to increase the amount of wind flow, thereby allowing for an improvement in the cooling effectiveness and in space efficiency.

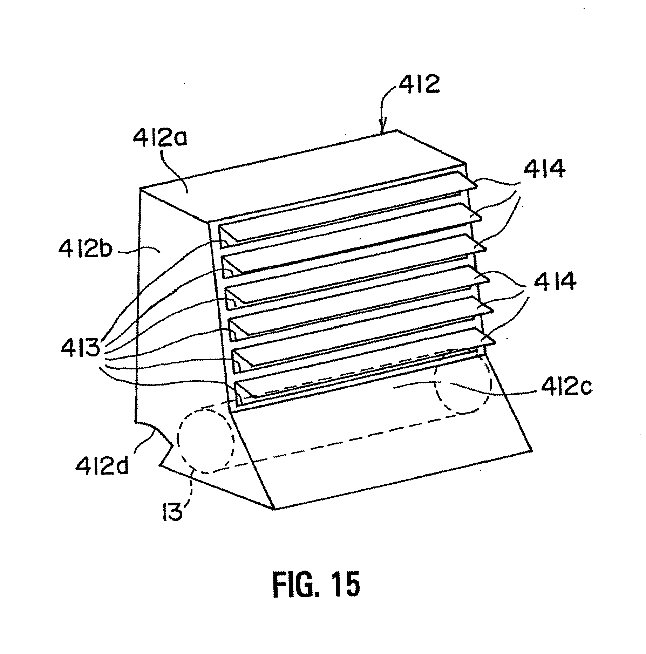

Figure 13 through Figure 15 describe the cooling device for use on a vehicle for the fourth embodiment of the present invention. Figure 13 is a schematic drawing of the vehicle front as viewed from the vehicle side showing the cooling device for use on a vehicle for the fourth embodiment; and Figure 14 is a perspective view as viewed from the rear diagonal direction showing the closed flapper for the cooling device for use on a vehicle for the fourth embodiment; and Figure 15 is a perspective view as viewed from the vehicle rear diagonal direction showing the open flapper for the cooling device for use on a vehicle for the fourth embodiment.

Moreover, the same reference symbols will be used in the description of the cooling device for use on a vehicle for the fourth embodiment for those portions where they are the same or similar to the first embodiment through the third embodiment, and an explanation will be provided concentrating on those parts that are different.

The cooling device for use on a vehicle for the fourth embodiment is an example of providing flappers, which open and close according to a predetermined air pressure.

In other words, the duct 412 is formed of a top plate 412a, side plate 412b, rear plate 412c, and bottom plate 412d using resin to form them all into a single box shape, and has an inlet 125 and outlet 126, as was the case with the first embodiment.

Six rear openings 413 having a width that spans across nearly the entire vehicle lateral direction are provided in a row to the rear plate 412c in the upper to lower direction of the vehicle, and flappers 414 for opening and closing each rear opening 413 are provided. These flappers 414 are rotatably attached at the vehicle top end portions to rear plate 412c, and when the pressure of the air passage 11 is in a low state (the pressure is almost equal to the atmospheric pressure), such as when the vehicle is stopped or traveling at a low speed, the rear openings 413 are closed due to their own weight or by applying force, as shown in Figure 14. Further, the flappers 414 are positioned so that rear openings 413 open, as shown in Figure 13 and Figure 15, in resistance to their own weight or the force applied when the pressure of the air passage 11 within the duct 412 reaches a predetermined pressure, which is higher than the atmospheric pressure, that corresponds to the pressure when the vehicle is traveling at a high speed.

A description of the operation of the fourth embodiment is given hereinafter.

When the speed of the vehicle is at a high speed, the pressure in the air passage 11 that passes through the condenser 9 and radiator 10 increases and each of the flappers 414 open. In this manner, the wind entering from the intake 8 of the vehicle front surface passes through the condenser 9 and the radiator 10 in a nearly direct route out to engine compartment R, as shown by Arrow B.

Depending on the engine load (radiator radiation requirements), the condenser 9 and radiator 10 can be cooled by only the vehicle wind speed passing through to the engine compartment R allowing the drive of the cross-flow fan 13 to be stopped, thereby improving energy efficiency.

As described above, when the rear openings 413 are open, the cross-flow fan 13 does not become a resistance to the wind flowing from the radiator 10 to the rear openings 413, thereby enabling cooling performance to be improved, compared to when the cross-flow fan 13 is placed directly behind the radiator 10.

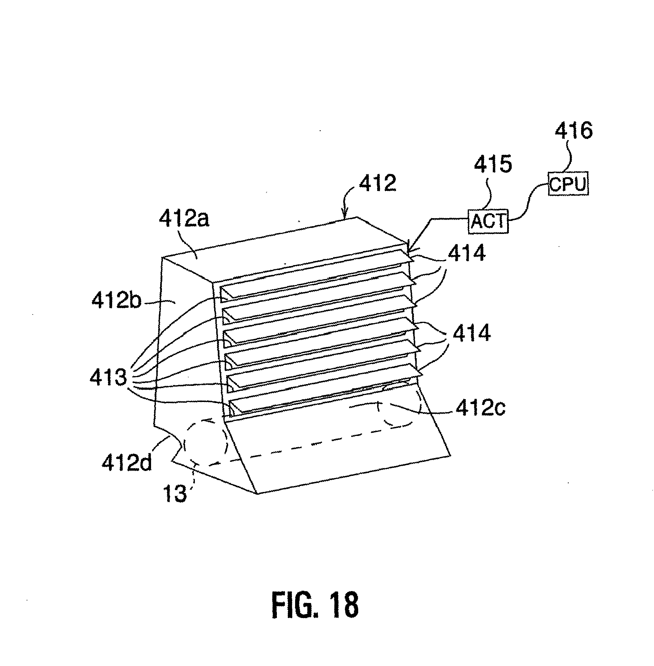

Figure 18 is a drawing that shows another embodiment of flaps 414. Actuator 415 is provided and is electrically connected to flaps 414. Actuator 415 is driven by a signal from controller 416. For example, when a predetermined vehicle speed or more is reached, such as a running speed of 60km/hr or more, controller 416 drives actuator 415 and opens flaps 414. This predetermined vehicle speed is decided so as to coincide with the heat environment in accordance with the vehicle. Therefore, when the predetermined speed is exceeded, actuator 415 and the motor can be driven by means of the electrical signal from controller 416, and flaps 414 can be opened.

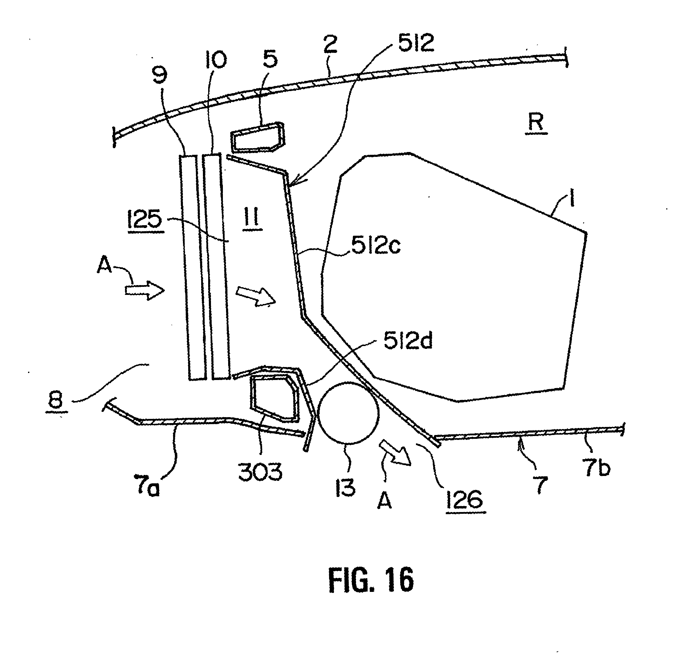

Figure 16 is a schematic drawing of the vehicle front as viewed from the vehicle side showing the cooling device for use on a vehicle for the fifth embodiment of the Embodiments of the present invention.

Moreover, the same reference symbols will be used in the description of the cooling device for use on a vehicle for the fifth embodiment for those portions where they are the same or similar to the first embodiment through the fourth embodiment, and an explanation will be provided concentrating on those parts that are different.

The cooling device for use on a vehicle for the fifth embodiment is a modified example of the first embodiment with the difference being that the duct 512 is formed of a top plate 512a, a side plate (not shown in the drawing), a rear plate 512c, and a bottom plate 512d using resin to form them all into a single box shape.

With the cooling device for use on a vehicle for the fifth embodiment, because the cross-flow fan 13 is placed in a position lower than the horizontal projection area of the condenser 9 and radiator 10, the same cooling effectiveness can be achieved as that in the first embodiment.

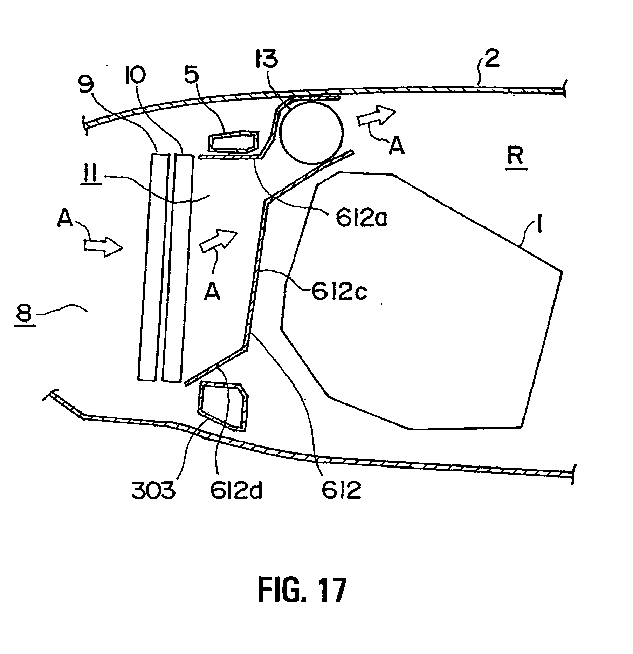

Figure 17 is a schematic drawing of the vehicle front as viewed from the vehicle side showing the cooling device for use on a vehicle for the sixth embodiment of the present invention.

Moreover, the same reference symbols will be used in the description of the cooling device for use on a vehicle for the sixth embodiment for those portions where they are the same or similar to the first embodiment through the fifth embodiment, and an explanation will be provided concentrating on those parts that are different.

The cooling device for use on a vehicle for the sixth embodiment is a modified example of the third embodiment with the difference being that the duct 612 is formed of a top plate 612a, a side plate (not shown in the drawing), a rear plate 612c, and a bottom plate 612d using resin to form them all into a single box shape.

With the cooling device for use on a vehicle for the sixth embodiment, because the cross-flow fan 13 is placed in a position higher than the horizontal projection area of the condenser 9 and radiator 10, the same cooling effectiveness can be achieved as that in the third embodiment.

Although having provided detailed descriptions in embodiment 1 through embodiment 6 for Embodiments of the present invention with reference to drawings, the specific composition is not limited to embodiments 1 through 6 nor to the Embodiments of the present invention, and any design modification is included in the present invention, as long as it does not deviate from the gist of the present invention.

In other words, with the cooling device for use on a vehicle for embodiment 1 through embodiment 6, examples are given indicating that the cross-flow fan 13, 313 is provided either above or below the horizontal projection area to the vehicle rearward direction of the condenser 9 and radiator 10, but it may also be provided at both positions, above and below. Or, depending on the shape of the vehicle, the cross-flow fan can be provided on either the left or right side or both sides in the vehicle lateral direction, as long as it is outside the horizontal projection area towards the vehicle rearwards direction of the heat exchanger, such as the condenser 9 and radiator 10.

With the cooling device for use on a vehicle for embodiment 1 through embodiment 6, an example is given of a water cooled engine 1, however, this engine 1 is shown in order to clarify the placement of the cross-flow fan and the type or shape thereof is not limited to that shown in the embodiments. In other words, an air-cooled engine may also be used as the engine; and this also applies to cooling of a heat exchanger as a means to cool components other than the engine in a vehicle that uses a motor as its drive source.

A condenser 9 and radiator 10 are indicated in embodiment 1 through embodiment 6 as the heat exchanger, but the heat exchanger is not limited to this and can be either one of these or may also be another means, such as an intercooler.

The present application claims priority from Japanese Patent Application No. 2005-123146, filed on 21^{st} April 2005, the contents of which are incorporated herein by reference.

## Claims

1. A cooling apparatus for a vehicle comprising:
heat exchanger means;
duct means for channelling air that has passed through the heat exchanger means; and
fan means for drawing in the air that has passed through the heat exchanger means and blowing it from an exit of the duct means, the fan means being disposed outside of an area immediately behind the heat exchanger means;
wherein the duct means includes valve means arranged to open when the vehicle is travelling at or above a predetermined speed such that air that has passed through the heat exchanger means passes through the opening portion.

2. An apparatus as claimed in claim 1 wherein the fan means is disposed outside of a volume projected behind the heat exchanger means and corresponding to a cross sectional area thereof.

3. A cooling apparatus as claimed in claim 1 or claim 2 wherein the fan means is disposed outside of a horizontal projection area behind the heat exchanger means.

4. An apparatus as claimed in any preceding claim wherein the fan means is disposed above and/or below a horizontal projection area of the heat exchanger means.

5. An apparatus as claimed in claim 3 or claim 4 wherein the fan means comprises a first fan disposed above the horizontal projection area of the heat exchanger means and a second fan disposed below the horizontal projection area of the heat exchanger means.

6. An apparatus as claimed in any preceding claim wherein the fan means includes at least one bearing disposed on a closed cross-section portion of a side member of the vehicle.

7. An apparatus as claimed in any preceding claim comprising motor means for driving the fan means, the motor means being disposed within a closed cross-section portion of a side member of the vehicle.

8. An apparatus as claimed in any preceding claim wherein at least a part of the duct means comprises a part of the vehicle body.

9. An apparatus as claimed in claim 8 wherein the part of the vehicle body comprises a cross member extending laterally across the vehicle, an upper surface or a lower surface of the cross member forming part of the duct means.

10. An apparatus as claimed in claim 9, wherein the fan means is placed to the rear of the cross member and wherein a rear end portion of the cross member is shaped to conform substantially to a shape of the fan means.

11. An apparatus as claimed in any preceding claim wherein the fan means is disposed at a location wherein air pressure may be lower than the atmospheric pressure when the vehicle is travelling.

12. An apparatus as claimed in any preceding claim comprising:
one or more flaps provided in or on the duct means and located within a horizontal projection area behind the heat exchanger means;
actuator means coupled to the one or more flaps; and
control means electrically coupled to the actuator;
wherein the control means is arranged to control the actuator to open the one or more flaps when the vehicle is travelling at or above a predetermined speed so that air that has passed through the heat exchanger passes through the flaps without passing through the fan.

13. A method of cooling a vehicle, the method comprising:
drawing an airflow through a heat exchanger using a cross-flow fan located outside of a horizontal projection area behind a heat exchanger when a speed of the vehicle is less than a predetermined speed; and
turning the fan off and using a motion of the vehicle to push the airflow through the heat exchanger when the vehicle speed is greater than or equal to the predetermined speed.
